# EUROPEAN PATENT APPLICATION

(11) **EP 3 499 344 A1**
(43) Date of publication of application: **19.06.2019**
(21) Application number: 18213209.2
(22) Date of filing: 17.12.2018
(51) Int. Cl.: G06F 3/01, G06F 3/033, G06F 3/0346, G06F 3/0354

(54) **HAPTICALLY-ENABLED PERIPHERAL USABLE FOR TWO-DIMENSIONAL AND THREE-DIMENSIONAL TRACKING**

(30) Priority: 18.12.2017 US 201715845845
(71) Applicant: Immersion Corporation, San Jose, CA 95134 (US)
(72) Inventor: ULLRICH, Christopher J., San Jose, CA California 95134 (US); RIHN, William, San Jose, CA California 95134 (US)
(74) Representative: McDougall, Robert Campbell

(57) **Abstract**

One illustrative peripheral disclosed herein includes one or more sensors (106) usable to detect a physical position of the peripheral (102) in real space. The illustrative peripheral can use the sensor(s) to determine whether the peripheral is positioned on a surface (104) or off the surface in real space. Responsive to determining that the peripheral is positioned on the surface, the peripheral can activate a first haptic output mode configured to provide a first set of haptic effects based on two-dimensional movement of the peripheral along the surface. Responsive to determining that the peripheral is positioned off the surface, the peripheral can activate a second haptic output mode configured to provide a second set of haptic effects based on three-dimensional movement of the peripheral in real space.

## Description

### Technical Field

The present disclosure relates generally to the field of user interface devices. More specifically, but not by way of limitation, this disclosure relates to a haptically-enabled peripheral usable for two-dimensional and three-dimensional tracking.

### Background

A peripheral is an auxiliary device that connects to and works with a computing device to provide input to the computing device, receive output from the computing device, or both. Peripherals are separate from the computing devices with which they communicate and provide additional functionality to the computing devices. For example, input peripherals can provide additional input functionality to a computing device. Examples of input peripherals can include a mouse, keyboard, game controller, stylus, or wand. Output peripherals can provide additional output functionality to a computing device. Examples of output peripherals can include a display, printer, or projector. Some peripherals can be both input and output peripherals, such as touchscreens, tablets, e-readers, headsets (e.g., virtual reality headsets or augmented reality headsets), or smart devices (e.g., smart phones or smart watches).

Input peripherals are generally designed to provide a single type of input to a computing device. For example, a mouse may only provide two-dimensional input (e.g., an X and Y coordinates in a coordinate plane) to a computing device. And a game controller may only provide three-dimensional input (e.g., X, Y, and Z coordinates) to the computing device. This requires a user to connect at least two different peripherals to a computing device and manually switch between the different peripherals to provide different types of input to the computing device, which can be time consuming and difficult. Also, many peripherals lack haptic feedback capabilities. This can make interacting with a computing device using the peripherals more challenging and less intuitive.

### Summary

Various examples of the present disclosure involve a peripheral capable of generating haptic effects and usable for both two-dimensional and three-dimensional tracking.

In a first example there is presented a peripheral comprising: a processor; and, a memory device comprising program code that is executable by the processor to cause the processor to: receive one or more sensor signals from one or more sensors usable to detect a physical position of the peripheral in real space; determine whether the peripheral is positioned on a surface or off the surface in real space based on the one or more sensor signals; responsive to determining that the peripheral is positioned on the surface, activate a first haptic output mode configured to provide a first set of haptic effects based on two-dimensional movement of the peripheral along the surface; and, responsive to determining that the peripheral is positioned off the surface, activate a second haptic output mode configured to provide a second set of haptic effects based on three-dimensional movement of the peripheral in real space. The peripheral of the first example may be modified in any suitable way disclosed herein including, but not limited to, any one or more of the following.

The peripheral may be configured such that the memory device further comprises program code that is executable by the processor to cause the processor to: responsive to determining that the peripheral is physically positioned off the surface, determine a three-dimensional position of the peripheral in real space by applying an inside-out tracking technique based on the one or more sensor signals; determine a haptic effect based on (i) the second haptic output mode being activated and (ii) the three-dimensional position of the peripheral in real space; and, cause a haptic output device to output the haptic effect.

The peripheral may be configured such that the memory device further comprises program code that is executable by the processor to cause the processor to: receive a sensor signal from an optical sensor that is external to the peripheral; and, determine the three-dimensional position of the peripheral in real space by (i) applying the inside-out tracking technique using the one or more sensor signals from the one or more sensors and (ii) using the sensor signal from the optical sensor that is external to the peripheral.

The peripheral may be configured such that the memory device further comprises program code that is executable by the processor to cause the processor to: responsive to determining that the peripheral is physically positioned on the surface, determine a two-dimensional position of the peripheral on the surface based on the one or more sensor signals; determine a haptic effect based on (i) the first haptic output mode being activated and (ii) the two-dimensional position of the peripheral on the surface; and, cause a haptic output device to output the haptic effect.

The peripheral may be configured such that the one or more sensors comprises a first optical sensor and a second optical sensor that is separate from the first optical sensor, and wherein the memory device further comprises program code that is executable by the processor to cause the processor to: responsive to determining that the peripheral is positioned on the surface, activate a first tracking mode in which two-dimensional input generated using the first optical sensor is provided to a remote computing device rather than three-dimensional input generated using the second optical sensor; and, responsive to determining that the peripheral is positioned off the surface, activate a second tracking mode in which the three-dimensional input generated using the second optical sensor is provided to the remote computing device rather than two-dimensional input generated using the first optical sensor.

The peripheral may be configured such that the memory device further comprises program code that is executable by the processor to cause the processor to: determine whether the peripheral is physically attached to a carrying device configured to physically couple the peripheral to a body part other than a hand; and, responsive to determining that the peripheral is physically coupled to the carrying device, activate a third haptic output mode configured for rendering haptic effects during hands-free use.

The peripheral may be configured such that the memory device further comprises program code that is executable by the processor to cause the processor to: determine whether a body part is contacting the peripheral based on a sensor signal from a contact sensor; and, responsive to determining that the body part is not contacting the peripheral, disable haptic effects.

The peripheral may further comprise a sensor usable to detect a gesture through real space performed by an object that is remote from the peripheral, wherein the memory device further comprises program code that is executable by the processor to cause the processor to: determine the gesture through real space using the sensor; and, based on the gesture, transmit a command associated with the gesture to a remote computing device.

The peripheral may further comprise a sensor usable to determine physical properties of a physical object in real space, wherein the memory device further comprises program code that is executable by the processor to cause the processor to: determine the physical properties of the physical object using the sensor; and, cause a three-dimensional virtual representation of the physical object to be generated in a virtual environment using the physical properties of the physical object.

The peripheral may be configured such that the memory device further comprises program code that is executable by the processor to cause the processor to: cause a two-dimensional version of a virtual object to be displayed when the peripheral is positioned on the surface; and, cause a three-dimensional version of the virtual object to be displayed when the peripheral is positioned off the surface.

In a second example, a peripheral of the present disclosure includes one or more sensors usable to detect a physical position of the peripheral in real space and transmit one or more sensor signals associated with the physical position of the peripheral in real space. The peripheral can also include a processor coupled to the one or more sensors. The peripheral can also include a memory device with program code that is executable by the processor to cause the processor to perform one or more operations. The operations can include receiving the one or more sensor signals. The operations can include determining whether the peripheral is positioned on a surface or off the surface in real space based on the one or more sensor signals. The operations can include, responsive to determining that the peripheral is positioned on the surface, activating a first haptic output mode configured to provide a first set of haptic effects based on two-dimensional movement of the peripheral along the surface. The operations can include, responsive to determining that the peripheral is positioned off the surface, activating a second haptic output mode configured to provide a second set of haptic effects based on three-dimensional movement of the peripheral in real space.

In a third example, a method of the present disclosure includes receiving a first set of sensor signals from one or more sensors usable to detect a physical position of a peripheral in real space. The method can include determining that the peripheral is physically positioned on a surface based on the first set of sensor signals. The method can include, responsive to determining that the peripheral is physically positioned on the surface, activating a first haptic output mode configured to provide a first set of haptic effects based on two-dimensional movement of the peripheral along the surface. The method can include receiving a second set of sensor signals from the one or more sensors. The method can include determining that the peripheral is physically positioned off the surface in real space based on the second set of sensor signals. The method can include, responsive to determining that the peripheral is positioned off the surface, activating a second haptic output mode configured to provide a second set of haptic effects based on three-dimensional movement of the peripheral in real space. Some or all of the steps of the method can be implemented by a processor (e.g., of a peripheral). The method of the third example may be modified in any suitable way as disclosed herein, including, but not limited to any one or more of the following.

The method may further comprise: determining a three-dimensional position of the peripheral in real space by applying an inside-out tracking technique based on the second set of sensor signals; determining a haptic effect based on (i) the second haptic output mode being activated and (ii) the three-dimensional position of the peripheral in real space; and, causing a haptic output device to output the haptic effect.

The method may be configured such that the one or more sensors comprises a first optical sensor and a second optical sensor that is separate from the first optical sensor, and further comprising: responsive to determining that the peripheral is physically positioned on the surface, activating a first tracking mode in which a two-dimensional input generated using the first optical sensor is provided to a computing device rather than a three-dimensional input generated using the second optical sensor; and, responsive to determining that the peripheral is physically positioned off the surface in real space, activating a second tracking mode in which the three-dimensional input generated using the second optical sensor is provided to the computing device rather than two-dimensional input determined using the first optical sensor.

The method may further comprise: determining whether the peripheral is physically attached to a carrying device configured to physically couple the peripheral to a body part other than a hand; and, responsive to determining that the peripheral is physically coupled to the carrying device, activating a third haptic output mode configured for rendering haptic effects during hands-free use.

The method may further comprise: determining whether a body part is contacting the peripheral based on a sensor signal from a contact sensor; and, responsive to determining that the body part is not contacting the peripheral, activating a third haptic output mode in which haptic effects are disabled.

The method may further comprise: displaying a two-dimensional version of a virtual object responsive to determining that the peripheral is physically positioned on the surface; and, displaying a three-dimensional version of the virtual object responsive to determining that the peripheral is physically positioned off the surface.

In a fourth example, a non-transitory computer-readable medium of the present disclosure can include program code for implementing the above method of the third example.

In a fifth example there is presented a computer-readable medium comprising program code that is executable by a processor to cause the processor to: receive one or more sensor signals from one or more sensors usable to detect a physical position of a peripheral in real space; determine whether the peripheral is physically positioned on a surface or off the surface in real space based on the one or more sensor signals; responsive to determining that the peripheral is physically positioned on the surface, activate a first haptic output mode configured to provide a first set of haptic effects based on two-dimensional movement of the peripheral along the surface; and, responsive to determining that the peripheral is positioned off the surface, activate a second haptic output mode configured to provide a second set of haptic effects based on three-dimensional movement of the peripheral in real space. The computer readable medium may be a non-transitory computer readable medium. The computer readable medium of the fifth example may be modified in any suitable way disclosed herein including, but not limited to, any one or more of the following.

The computer-readable medium may further comprise program code that is executable by the processor to cause the processor to: responsive to determining that the peripheral is physically positioned off the surface in real space, determine a three-dimensional position of the peripheral in real space by applying an inside-out tracking technique based on the one or more sensor signals; determine a haptic effect based on (i) the second haptic output mode being activated and (ii) the three-dimensional position of the peripheral in real space; and, cause a haptic output device to output the haptic effect.

The computer-readable medium may further comprise program code that is executable by the processor to cause the processor to: responsive to determining that the peripheral is physically positioned on the surface, determine a two-dimensional position of the peripheral on the surface based on the one or more sensor signals; determine a haptic effect based on (i) the first haptic output mode being activated and (ii) the two-dimensional position of the peripheral on the surface; and, cause a haptic output device to output the haptic effect.

The one or more sensors may comprise a first optical sensor and a second optical sensor that is separate from the first optical sensor. The computer-readable medium may further comprise program code that is executable by the processor to cause the processor to: responsive to determining that the peripheral is physically positioned on the surface, activate a first tracking mode in which a two-dimensional input generated using the first optical sensor is provided to a computing device rather than a three-dimensional input generated using the second optical sensor; and, responsive to determining that the peripheral is physically positioned off the surface in real space, activate a second tracking mode in which the three-dimensional input generated using the second optical sensor is provided to the computing device rather than two-dimensional input determined using the first optical sensor.

The computer-readable may further comprise program code that is executable by the processor to cause the processor to: determine whether the peripheral is physically attached to a carrying device configured to physically couple the peripheral to a body part other than a hand; and, responsive to determining that the peripheral is physically coupled to the carrying device, activate a third haptic output mode configured for rendering haptic effects during hands-free use.

The computer-readable medium may further comprise program code that is executable by the processor to cause the processor to: determine whether a body part is contacting the peripheral based on a sensor signal from a contact sensor; and responsive to determining that the body part is not contacting the peripheral, disable haptic effects.

In a sixth example there is presented a method comprising: receiving one or more sensor signals from one or more sensors usable to detect a physical position of a peripheral in real space; determining whether the peripheral is physically positioned on a surface or off the surface in real space based on the one or more sensor signals; responsive to determining that the peripheral is physically positioned on the surface, activating a first haptic output mode configured to provide a first set of haptic effects based on two-dimensional movement of the peripheral along the surface; and, responsive to determining that the peripheral is positioned off the surface, activating a second haptic output mode configured to provide a second set of haptic effects based on three-dimensional movement of the peripheral in real space. Some or all of the steps of this method can be implemented by a processor. The sixth example may be modified in any suitable way disclosed herein including any of the optional steps described above for the fifth example.

These illustrative examples are mentioned not to limit or define the limits of the present subject matter, but to provide examples to aid understanding thereof. Illustrative examples are discussed in the Detailed Description, and further description is provided there. Advantages offered by various examples may be further understood by examining this specification and/or by practicing one or more examples of the claimed subject matter.

### Brief Description of the Drawings

A full and enabling disclosure is set forth more particularly in the remainder of the specification. The specification makes reference to the following appended figures.
FIG. 1A is an example of a peripheral according to some aspects of the present disclosure.
FIG. 1B is an example of the peripheral of FIG. 1A positioned off a surface according to some aspects of the present disclosure.
FIG. 2 is a block diagram of an example of a system that includes a peripheral according to some aspects of the present disclosure.
FIG. 3 is an example of a peripheral with a removable accessory according to some aspects of the present disclosure.
FIG. 4 is an example of a peripheral with a carrying device according to some aspects of the present disclosure.
FIG. 5 is another example of a peripheral with a carrying device according to some aspects of the present disclosure.
FIG. 6 is a flow chart of an example of a process for implementing some aspects of the present disclosure.
FIG. 7 is an example of a peripheral detecting a gesture according to some aspects of the present disclosure.
FIG. 8 is an example of a peripheral detecting an object according to some aspects of the present disclosure.
FIG. 9 is a flow chart of an example of a process for implementing some aspects of the present disclosure.

### Detailed Description

Reference will now be made in detail to various and alternative illustrative examples and to the accompanying drawings. Each example is provided by way of explanation and not as a limitation. It will be apparent to those skilled in the art that modifications and variations can be made. For instance, features illustrated or described as part of one example may be used in another example to yield a still further example. Thus, it is intended that this disclosure include modifications and variations as come within the scope of the appended claims and their equivalents.

### Illustrative Example of a Haptically-Enabled Peripheral

One illustrative example of the present disclosure includes a peripheral device (or "peripheral") connected to a computing device, such as a desktop computer. The peripheral can be, for example, a computer mouse that is resting on a surface of a desk. A user can move the peripheral along the surface to provide two-dimensional (2D) input to the computer. For example, the user may be designing a model (e.g., of a vehicle) using computer-aided design (CAD) software. The user can slide the peripheral along the surface to interact with buttons, icons, menus, windows, or other objects output by the CAD software to manipulate the model. The 2D input provided by the peripheral can enable the user to have precise control over operations performed using the CAD software. In the illustrative example, the user may also wish to perform other operations using the CAD software that are more suited to a three-dimensional (3D) environment. So, the user may put on an augmented reality headset to view the model in a 3D environment. The user can then pick up the peripheral off the surface, stand next to the desk, and motion through real space with the peripheral to provide 3D input to the computer. This may enable the user to rotate, move, or otherwise manipulate the model more easily than using only 2D input. For example, the user can interact with the model by selecting and adjusting control points on the model to manipulate a surface geometry of the model. Once satisfied, the user can sit back down at the desk, position the peripheral back on the surface of the desk, and continue working again using 2D input.

In the above example, the peripheral is capable of providing both 2D and 3D input to the computing device. The peripheral can include one or more sensors to detect a physical position of the peripheral in real space. The peripheral can determine whether it is positioned on the surface or off the surface (in real space) using the sensors. If the peripheral determines that it is positioned on the surface, the peripheral can activate a first tracking mode in which 2D input is generated using a first sensor, such as an optical sensor, and provided to the computing device. If the peripheral determines that it is positioned off the surface, the peripheral can activate a second tracking mode in which 3D input is generated using a second sensor, such as a camera, and provided to the computing device. This can enable the peripheral to detect whether it is positioned on or off the surface and switch between tracking modes accordingly. In some examples, the different types of sensors and/or algorithms used for the different tracking modes may result in the first tracking mode being more robust and precise than the second tracking mode.

In some examples, the peripheral can generate the 3D input using inside-out tracking. Inside-out tracking can involve a device determining how its own position is changing relative to the external environment using a sensor positioned on the device and facing outwardly from the device. There may also be markers (e.g., infrared markers) placed on various stationary locations in the external environment to improve accuracy. For example, a camera can be positioned on the peripheral and facing outwardly from the peripheral. The peripheral can implement inside-out tracking using the camera to determine its position relative to the external environment. Inside-out tracking can be contrasted with outside-in tracking, in which the sensor that is tracking the device is positioned external to the device and facing the device. An example of outside-in tracking can include a camera positioned externally to the peripheral, such as on a desk or stand in a room, to capture images of the movement of the peripheral through the room.

Inside-out tracking can be implemented using any number and combination of algorithms, such as via a simultaneous localization and mapping (SLAM) algorithm. SLAM can involve constructing or updating a map of an unknown external environment while also keeping track of an object's location within that environment. In one example, the peripheral implements a SLAM algorithm to determine its 3D position in real space. The peripheral can then provide its 3D position as input to the computing device.

In some examples, the peripheral can also generate haptic feedback. The peripheral may generate different haptic feedback based on whether the peripheral is positioned on or off the surface. For example, if the peripheral detects that it is positioned on the surface, the peripheral can activate a first haptic output mode configured to generate a first set of haptic effects based on the 2D movement of the peripheral along the surface. If the peripheral detects that it is positioned off the surface, the peripheral can activate a second haptic output mode configured to generate a second set of haptic effects based on the 3D movement of the peripheral in real space. The second set of haptic effects may be different in type, amplitude, waveform, duration, and/or frequency from the first set of haptic effects. Switching between the first and second haptic output modes in the manner discussed above can enable haptic feedback to be tailored appropriately depending on whether the peripheral is positioned on or off the surface.

These illustrative examples are given to introduce the reader to the general subject matter discussed here and are not intended to limit the scope of the disclosed concepts. The following sections describe various additional features and examples with reference to the drawings in which like numerals indicate like elements, and directional descriptions are used to describe the illustrative examples but, like the illustrative examples, should not be used to limit the present disclosure.

### Illustrative Systems for a Haptically-Enabled Peripheral

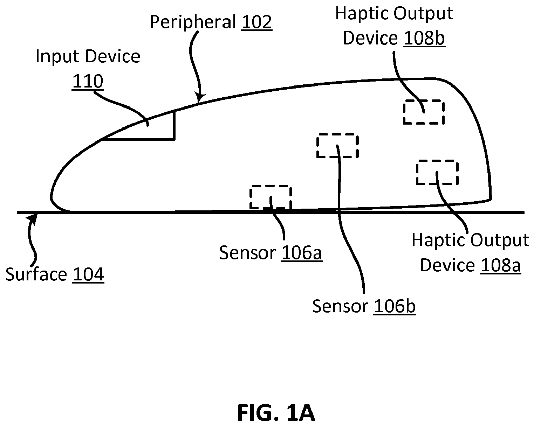

FIG. 1A is an example of a peripheral 102 according to some aspects of the present disclosure. In this example, the peripheral 102 is a hand-held device configured to be grasped and manipulated with a user's hand. The peripheral 102 is connected (e.g., wirelessly) to a computing device for providing input to the computing device.

In this example, the peripheral 102 is positioned on a surface 104. Examples of the surface 104 can include a tabletop; desktop; mouse pad; piece of wood, metal, rubber, or plastic; or any combination of these. The surface 104 can have a curved shape or a substantially planar shape, which can provide a relatively flat surface along which the peripheral 102 can slide.

The peripheral 102 can include one or more input devices, such as input device 110. Examples of the input device 110 can include a button, joystick, touchscreen, touchpad, switch, or any combination of these. The input device can detect a user input and transmit an input signal to the computing device. Input devices can be positioned on any surface or combination of surfaces of the peripheral 102.

The peripheral 102 can include one or more sensors, such as sensors 106a-b. Although two sensors 106a-b are shown in FIG. 1A as an example, the peripheral 102 may include more or fewer sensors, such as one or three sensors. The sensor(s) can detect the physical position of the peripheral 102 in real space. And the sensors can be of the same type or different types. For example, sensor 106a can be a 2D sensor, such as an optical sensor or ball for implementing 2D tracking along the surface 104. Sensor 106b can be a 3D sensor, such as a camera, accelerometer, gyroscope, range detector, depth sensor, global positioning system (GPS), and/or magnetometer for implementing 3D tracking in real space.

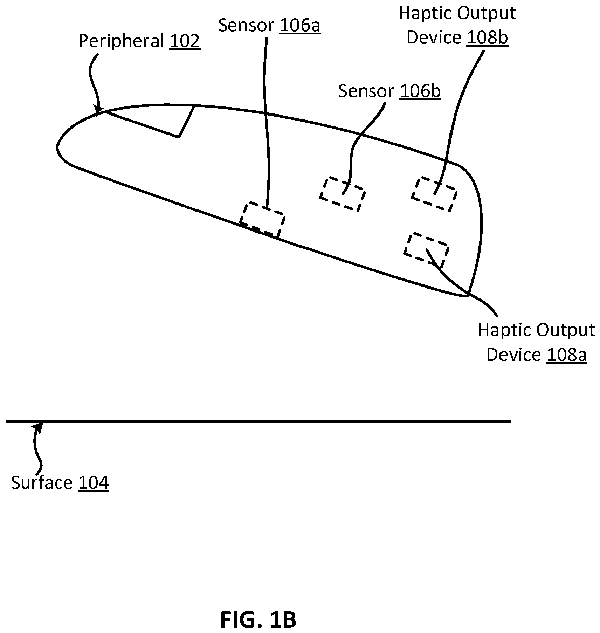

The peripheral 102 can use the sensors 106a-b to determine whether the peripheral 102 is positioned on the surface 104 or off the surface 104. For example, the peripheral 102 can analyze optical signals from an optical sensor to determine a distance between the peripheral 102 and the surface 104. The peripheral 102 can then determine if the distance exceeds a predefined threshold. If not, the peripheral 102 can determine that it is positioned on the surface 104 and activate a first tracking mode. If so, the peripheral 102 can determine that it is positioned off the surface 104 and activate a second tracking mode. The peripheral 102 can be positioned "off" the surface 104 when the peripheral 102 is not contacting the surface, as shown in FIG. 1B.

The peripheral 102 can also use the sensors 106a-b to determine a 2D position and/or a 3D position of the peripheral 102 in real space. For example, when the peripheral 102 is in the first tracking mode, the peripheral 102 can use a ball or an optical sensor to determine a 2D position of the peripheral 102 on the surface 104. And when the peripheral 102 is in the second tracking mode, the peripheral 102 can use one or more cameras to determine a 3D position of the peripheral 102 in real space.

The peripheral 102 can include one or more haptic output devices, such as haptic output devices 108a-b. The haptic output devices 108a-b can provide one or more haptic effects to a user. The haptic output devices 108a-b can generate any number and combination of haptic effects using any number and combination of stimuli, such as vibrations, electrostatic forces, deformations, temperature changes, and/or electrical stimulation.

The peripheral 102 can use the haptic output devices 108a-b to output haptic effects in response to one or more events. The events can occur on the computing device or on the peripheral 102. An event is any interaction, action, collision, or other event which can potentially have an associated haptic effect. Examples of an event may include user input (e.g., an interaction with a real or virtual button, a joystick, or a touch surface; tilting or orienting a device; or bending, folding, twisting, stretching, or flexing a device), a system status (e.g., low battery, low memory, or a system notification, such as a notification generated based on the system receiving an incoming call), sending data, receiving data, or a program event (e.g., a game event, such as an explosion, collision or interaction between game objects, or advancing to a new level). As a particular example, the computing device can determine that a virtual character in a video game has been shot and responsively transmit a haptic signal to the peripheral 102. The peripheral 102 can then generate a haptic effect in response to the haptic signal.

In some examples, the peripheral 102 can activate a first haptic output mode in response to detecting that the peripheral 102 is positioned on the surface 104. The peripheral 102 can additionally or alternatively activate a second haptic output mode in response to detecting that the peripheral 102 is positioned off the surface 104. The peripheral 102 can output different haptic effects depending on which haptic output mode is activated. For example, the peripheral 102 may use different haptic output devices to generate haptic effects depending on which haptic output mode is activated. As a particular example, the peripheral 102 can use a first haptic output device 108a to generate a first type of haptic effect (e.g., using a first type of stimulus, such as a vibration) when the peripheral 102 is in the first haptic output mode. And the peripheral 102 can use a second haptic output device 108b to generate a second type of haptic effect (e.g., using a second type of stimulus, such as a deformation) when the peripheral 102 is in the second haptic output mode.

In some examples, the peripheral 102 uses different haptic-effect libraries or algorithms to determine a haptic effect to output depending on which haptic output mode is activated. For example, the peripheral 102 can receive a notification from the computing device indicating that an event has occurred. If the peripheral 102 is in the first haptic output mode, the peripheral 102 can use a first haptic-effect library to determine a haptic effect to output in response to the event. If the peripheral 102 is in the second haptic output mode, the peripheral 102 can use a second haptic-effect library to determine another haptic effect to output in response to the event. This can enable haptic effects to be tailored for the different haptic output modes.

In some examples, the peripheral 102 can transmit information to the computing device indicating which haptic output mode is activated. The computing device can use this information to control (i) when haptic effects are generated using the peripheral 102, (ii) which haptic effects are generated using the peripheral 102, or (iii) both of these. For example, the computing device may only cause the peripheral 102 to output haptic effects in response to a first set of events when the peripheral 102 is in the first haptic output mode. And the computing device may only cause the peripheral 102 to output haptic effects in response to a second set of events when the peripheral 102 is in the second haptic output mode. This can enable the different haptic output modes to have different sets of events as haptic triggers. As another example, the computing device can use different haptic-effect libraries or algorithms to determine a haptic effect to be output by the peripheral 102 depending on which haptic output mode is activated.

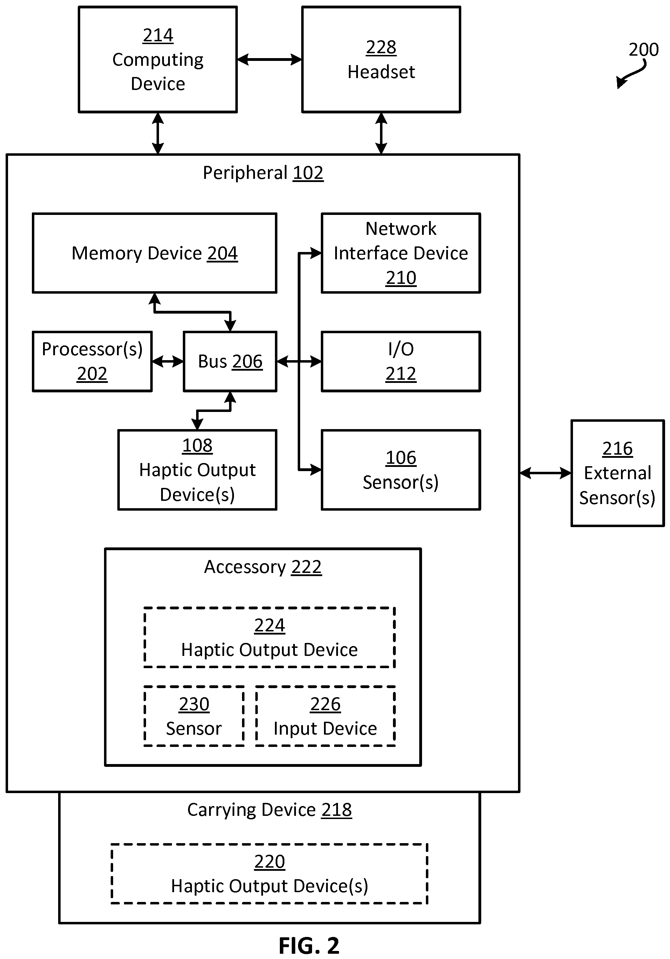

FIG. 2 is a block diagram of an example of a system 200 that includes a peripheral 102 according to some aspects of the present disclosure. In this example, the peripheral 102 includes one or more processors 202 interfaced with other hardware via bus 206. The other hardware includes a memory device 204, a network interface device 210, an input/output (I/O) interface 212, one or more sensors 106, and one or more haptic output devices 108. Each of these components is described in greater detail below. Other examples can include more or fewer components than depicted in FIG. 2.

The memory device 204 can include any suitable tangible (and non-transitory) computer-readable medium such as RAM, ROM, EEPROM, or the like, and may embody program components that configure operation of the peripheral 102. For example, the memory device 204 can include program code that is executable by the one or more processors 202 to cause the one or more processors 202 to perform operations.

The network interface device 210 can include any components that facilitate a network connection or otherwise facilitate communication between electronic devices. In some examples, the network interface device 210 can include a wired interface, such as an Ethernet, USB, or IEEE 1394 interface. Additionally or alternatively, the network interface device 210 can include a wireless interface, such as an IEEE 802.11, Bluetooth, near-field communication, radio-frequency identification, or radio interface. The radio interface can be for accessing cellular telephone networks (e.g., a CDMA, GSM, UMTS, or other mobile communications network).

The I/O interface 212 can facilitate connection to devices such as one or more displays, touch-sensitive surfaces, speakers, microphones, buttons, joysticks, and/or other hardware used to input data or output data.

In some examples, the sensor(s) 106 can be used to detect a 2D position of the peripheral 102 in real space, a 3D position of the peripheral 102 in real space, or both. Examples of such sensors can include a ball, optical sensor (e.g., infrared sensor), camera, depth sensor, range sensor, ultrasonic transducer, speaker, microphone, accelerometer, gyroscope, inclinometer, GPS, magnetometer, or any combination of these. The sensor(s) 106 may additionally or alternatively include other types of sensors for other purposes, such as resistive sensors, capacitive sensors, pressure sensors, force sensors, biosensors, or any combination of these. The sensor(s) 106 can transmit sensor signals to the processor 202.

The haptic output device(s) 108 can output various haptic effects. Examples of the haptic effects can include a vibration, a change in a perceived coefficient of friction, a simulated texture, a change in temperature, a stroking sensation, an electro-tactile effect, a surface deformation (e.g., a deformation of a surface associated with the peripheral 102), or any combination of these. The peripheral 102 can actuate multiple haptic output devices 108 of the same or different types in sequence or in concert to generate one or more haptic effects. The haptic output device 108 can generate haptic effects in response to haptic signals from the processor 202 or the computing device 214.

In some examples, the haptic output device 108 includes a mechanical vibration-component, such as a piezoelectric material, an electric motor, an electromagnetic actuator, a voice coil, a shape memory alloy, an electro-active polymer, a solenoid, an eccentric rotating mass motor (ERM), or a linear resonant actuator (LRA). The haptic output device 108 can use the mechanical vibration-component to generate vibrations. In some examples, the haptic output device 108 can include an ultrasonic actuator capable of vibrating at an ultrasonic frequency (e.g., 20 kHz). The haptic output device 108 can use the ultrasonic actuator to, for example, reduce a perceived coefficient of friction on the surface. In some examples, the haptic output device 108 can include an electrostatic actuator. The electrostatic actuator can have a conducting layer and an insulating layer. Applying an alternating current (AC) to the conducting layer can generate a capacitive coupling between the conducting layer and an object (e.g., a body part or stylus) near the electrostatic actuator, thereby generating a haptic effect. Examples of a haptic effect generated using the electrostatic actuator can include a simulated texture, a simulated vibration, a stroking sensation, or a perceived change in a coefficient of friction on a surface of the peripheral 102.

The haptic output device 108 may also generate deformations in a surface of the peripheral 102, which can be referred to as deformation haptic effects. A deformation haptic effect can include raising or lowering portions of the surface, such as to create a texture; bending, folding, rolling, twisting, squeezing, or flexing the surface; or any combination of these. In some examples, the haptic output device 108 can generate deformation haptic effects using a smart gel or a shape-memory alloy. In other examples, the haptic output device 108 can generate deformation haptic effects using a rheological fluid. In still other examples, the haptic output device 108 can generate deformation haptic effects using a mechanical deformation-device, such as a rotating arm or piston. In some examples, the mechanical deformation-device can be a passive device that is activated or deactivate using a coupling mechanism, such as a latch or lock. For example, the peripheral 102 can include a hinge that enables two members of the peripheral 102 to bend relative to one another. When the peripheral 102 is positioned on the surface, a lock may prevent the hinge from opening, thereby preventing the members from bending. When the peripheral 102 is lifted off the surface, the lock can release and allow the members to bend relative to one another, which may deform the peripheral 102.

Other techniques or methods can additionally or alternatively be used to output haptic effects. For example, the haptic output devices 108 can output haptic effects using air or fluid pockets, particle jamming, electromagnets, resonant mechanical elements, micro-electromechanical systems ("MEMS") elements or pumps, thermal fluid pockets, variable porosity membranes, or laminar flow modulation. Any number and combination of techniques can be used to generate haptic effects.

In some examples the peripheral 102 can change shape in response to being removed from the surface, positioned on the surface, or both. For example, the peripheral 102 can be in a first shape (e.g., a mouse shape) when the peripheral 102 is positioned on the surface. This may be a shape that is more ergonomically comfortable to a user when sliding the peripheral 102 along the surface in two dimensions. If the peripheral 102 is removed from the surface, the peripheral 102 can detect the removal and responsively change into a second shape (e.g., a rod shape or a stylus shape), which may be more ergonomically comfortable for a user when manipulating the peripheral 102 in three dimensions. In some examples, the peripheral 102 can change its shape by operating the haptic output device 108, which may deform one or more surfaces of the peripheral 102 to manipulate the shape of the peripheral 102. The peripheral 102 may be able to additionally or alternatively detect that it is approaching the surface, it is positioned on the surface, an input device (e.g., input device 110 of FIG. 1) has been manipulated, or another condition has occurred. In response, the peripheral 102 can manipulate its shape back into the first shape. For example, the peripheral 102 can use a camera or optical sensor to detect that the peripheral 102 is approaching or contacting the surface. In response, the peripheral 102 can change its shape back into a mouse shape.

The peripheral 102 can be in wired or wireless communication with one or more external electronic devices, such as computing device 214. Examples of the computing device 214 can include a desktop computer, laptop computer, mobile phone (e.g., a smartphone), portable media player (e.g., a MP3 player), tablet, e-reader, a portable gaming device, a game system, a medical device, a vehicle computing-device, a headset, or any combination of these. The peripheral 102 can provide input to the computing device 214. For example, the peripheral 102 can communicate its position to the computing device 214, which can control the position of a cursor based on the position of the peripheral 102.

The peripheral 102 can additionally or alternatively be in communication with a headset 228, such as a virtual reality headset or an augmented reality headset. The headset 228 can include a display for viewing and interacting with virtual objects. The peripheral 102 can provide input to the headset 228. For example, the peripheral 102 may provide 3D input to the headset 228 when the peripheral 102 is positioned off a surface and 2D input to the headset 228 when the peripheral 102 is positioned on a surface. Although the computing device 214 is shown in FIG. 2 as being separate from the headset 228, in other examples the computing device 214 is (or includes) the headset 228.

In some examples, the peripheral 102 can communicate with both the headset 228 and the computing device 214 to switch between the two. For example, a user may be using the computing device 214 to shop for clothing online. The computing device may be displaying a virtual object, for example, representing an item of clothing. The user can use the peripheral 102 to interact with the virtual object as desired. The user may then put on the headset 228, stand up, and pick up the peripheral 102 off the surface to engage with the virtual object in a 3D environment. The peripheral 102 can detect that it has been removed from the surface and responsively communicate with the headset 228 to cause the headset 228 to display the virtual object on its display. The peripheral 102 may also communicate with the computing device 214 to cause the computing device 214 to shut down its display, enter a standby mode, or perform another operation. Once the user has finished engaging with the virtual object in the 3D environment, the user may place the peripheral 102 back onto the surface. The peripheral 102 can detect that it has been placed back on the surface and responsively cause the computing device 214 to once again display the virtual object. The peripheral 102 may also cause the headset 228 to shut down its display, enter a standby mode, or perform another operation. This can enable a user to easily switch between the 2D and 3D environments provided by the computing device 214 and the headset 228, respectively.

The peripheral 102 can additionally or alternatively be in communication with one or more external sensors 216. The peripheral 102 can use the external sensors 216 to determine the position of the peripheral 102 in real space. Examples of the external sensors 216 can include optical sensors, cameras, depth sensors, range sensors, microphones, ultrasonic transducers, or any combination of these. In some examples, the peripheral 102 can receive sensor signals from the external sensors 216 and generate outside-in tracking information based on the sensor signals. The peripheral 102 may also generate inside-out tracking information based on sensor signals from the sensors 106. The peripheral 102 can then determine the position of the peripheral 102 in real space based on the outside-in tracking information, the inside-out tracking information, or both. In some examples, determining of the position of the peripheral 102 using both the outside-in tracking information and the inside-out tracking information can be more robust and accurate than using either of these types of information alone.

In some examples, the peripheral 102 can include various modular components, such as accessory 222. Examples of an accessory 222 can include a stylus, wand, card, or module. The accessory 222 can be removably coupled to a base of the peripheral 102. Although FIG. 2 depicts a single accessory 222, the peripheral 102 can include any number and combination of accessories 222.

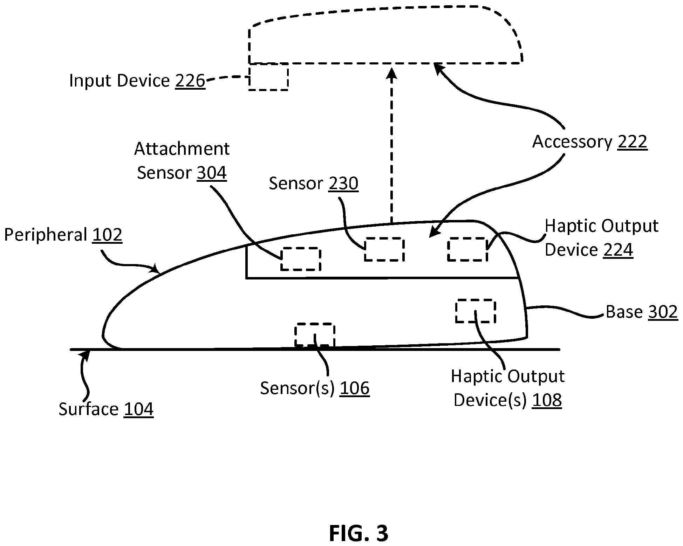

An example of an accessory 222 is shown in FIG. 3. In FIG. 3, the accessory 222 forms a contact portion of the peripheral 102. The contact portion is an outer surface of the peripheral 102 that is shaped and positioned to be contacted by a user's hand during operation. The accessory 222 can be attached to, or removed from, the base 302 of the peripheral 102 as desired. For example, the accessory 222 can be inserted into, or removed from, a dock or receptacle formed from the base 302. When the accessory 222 is attached to the base 302, the accessory 222 and the base 302 can collectively form the peripheral 102.

The accessory 222 can include a sensor 230, a haptic output device 224, an input device 226, a processor, a memory device, a bus, I/O components, a network interface device, or any combination of these, which can be configured similarly to the components discussed above.

In some examples, the accessory 222 is configured to provide 3D input and the base 302 is configured to provide 2D input. For example, the sensor 106 in the base 302 may be a ball or optical sensor for providing 2D input to a computing device. And the sensor 230 in the accessory 222 may be a camera for providing 3D input to the computing device. In one such example, the peripheral 102 can detect that the accessory 222 is attached to the base 302 and responsively provide 2D input to the computing device using sensor 106. If a user removes the accessory 222 from the base 302, the peripheral 102 can detect that the accessory 222 is separated from the base 302 and responsively provide 3D input to the computing device using sensor 230. For example, the accessory 222 can transmit the 3D input to the base 302, which in turn can relay the 3D input to the computing device. Alternatively, the accessory 222 can detect that it is separated from the base 302 and responsively provide the 3D input to the computing device, without relaying the 3D input through the base 302.

As a particular example, a user may play a video game on the computing device by moving around the peripheral 102 (as a single unit) on a surface, with the accessory 222 attached to the peripheral 102. The peripheral 102 can detect that the accessory 222 is attached to the peripheral 102 and provide 2D input via sensor 106. The peripheral 102 may also provide haptic effects via haptic output device 108, haptic output device 224, or both. The user may then decide to play a portion of the video game using 3D controls, lift the accessory 222 from the base 302 (e.g., while the base 302 remains on the surface), and manipulate the accessory 222 to provide 3D input to the computing device. The peripheral 102 can detect that the accessory 222 is separate from the peripheral 102 and responsively provide the 3D input. The peripheral 102 may also provide haptic effects via haptic output device 224. For example, the computing device or the base 302 can transmit haptic signals to the accessory 222 to cause the accessory 222 to generate haptic effects via haptic output device 224.

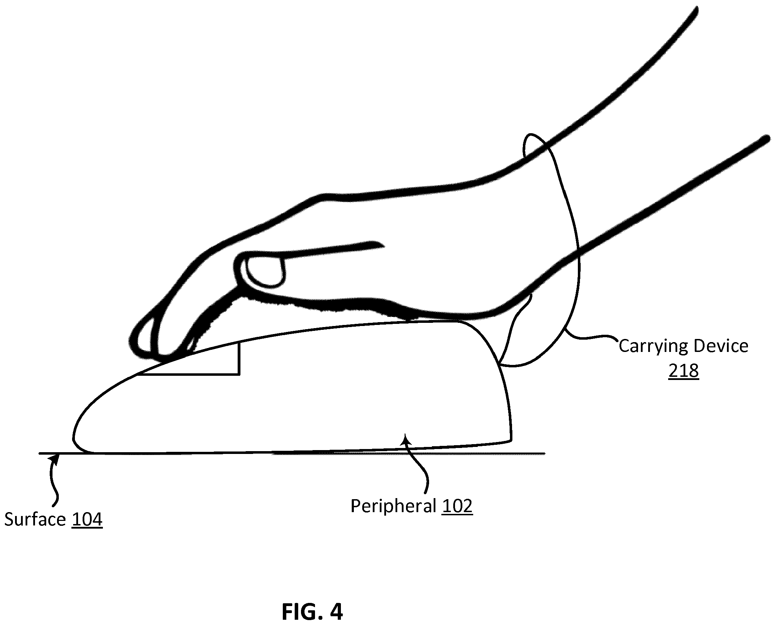

The accessory 222 can also include any number and combination of input devices, on any number and combination of surface, to enable a user to provide input while manipulating the accessory 222. In some examples, the input device 226 can be positioned on the accessory 222 so as to be normally hidden (e.g., enclosed in the base 302) when the accessory 222 is attached to the base. The input device 226 may then become visible and/or usable when the accessory 222 is removed from the base 302. As a particular example, the accessory 222 can have a button in the position shown in FIG. 4, which is normally blocked from use by the base 302. But if the accessory 222 is removed from the base 302, as indicated by the dashed arrow, the input device 226 becomes available for use.

In some examples, the accessory 222 can change shape in response to being separated from and/or connected to the base 302. For example, the accessory 222 can be in a first shape when the accessory 222 is attached to the base 302. If the accessory 222 is removed from the base 302, the accessory 222 can detect the removal and responsively change into a second shape, for example, into a rod shape or a stylus shape, which may be more ergonomically comfortable for a user. In some examples, the accessory 222 can change its shape by operating the haptic output device 224, which may deform one or more surfaces of the accessory 222 to manipulate the shape of the accessory 222. The accessory 222 may be able to additionally or alternatively detect that (i) it is approaching the base 302, (ii) it is attached to the base 302, (iii) an input device 226 has been manipulated, or (iv) another condition has occurred. In response, the accessory 222 can manipulate its shape back into the first shape.

As a particular example, the accessory 222 can be switched between at least two shapes. The first shape can have a curved top-surface and a flat bottom-surface, as shown in FIG. 4. The second shape can be substantially cylindrical, which may be easier to hold or manipulate in real space. The accessory 222 may include an attachment sensor 304 to detect whether the accessory 222 is attached to the base 302. Examples of the attachment sensor 304 can include a conductive path, a button, a switch, an optical sensor, a camera, or any combination of these. If a user removes the accessory 222 from the base 302, the accessory 222 can detect the removal via the attachment sensor 304 and responsively deform into the second shape. The user can then manipulate the accessory 222 to provide 3D input to a computing device. When the user finishes using the accessory 222, the user may wish to re-attach the accessory 222 to the base 302. In one example, the user can manipulate the input device 226, which can cause the accessory 222 to change back into the first shape. This may enable the accessory 222 to be re-attached to the base 302. In another example, as the user moves the accessory 222 toward the base 302, a sensor in the accessory 222 may detect that the accessory 222 is approaching the base 302. Examples of the sensor can include a camera, optical sensor, depth sensor, range sensor, wireless signal sensor (e.g., 802.11, Bluetooth, or RFID), or any combination of these. In some examples, the sensor can be sensor 230. The accessory 222 can deform back into the first shape in response to detecting that the accessory 222 is approaching the base 302. This may permit the accessory 222 to be re-attached to the base 302.

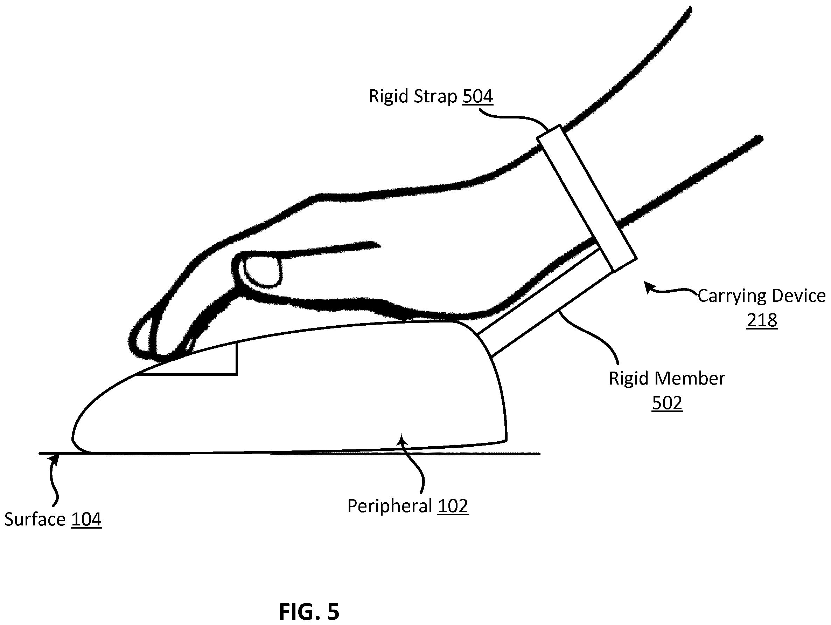

Returning to FIG. 2, in some examples the peripheral 102 can include one or more carrying devices, such as carrying device 218. Examples of the carrying device 218 can include a wrist band, strap, cord, rigid member, or another device that can couple the peripheral 102 to a body part other than a hand, such as a wrist or arm of a user. The carrying device 218 can be permanently or removably coupled to the peripheral 102. One example of the peripheral 102 with the carrying device 218 is shown in FIG. 4. In this example, the carrying device 218 is flexible (e.g., a strap). In other examples, such as the example shown in FIG. 5, the carrying device 218 can be rigid, which can enable the peripheral 102 to maintain a certain positioning with respect to the user's body (e.g., the user's hand or fingers). This can make the peripheral 102 easier to use, for example, when the peripheral 102 is lifted off the surface 104. In the example shown in FIG. 5, a rigid member 502 is attached between the peripheral 102 and a strap 504, which wraps around the user's body (e.g., the user's forearm). But other configurations having more, fewer, or a different arrangement of rigid members are also possible for coupling the carrying device 218 to the user's body.

In some examples, the carrying device 218 can provide haptic effects to the user. For example, the carrying device 218 can include one or more haptic output devices, such as haptic output device 220. The peripheral 102 may actuate the haptic output device 220 to provide, for example, vibrations, kinesthetic haptic effects, deformation haptic effects, or other haptic effects to the user. More specifically, the haptic output device 220 can receive haptic signals from the peripheral 102 and responsively vibrate; expand in size, contract in size, change shape, or otherwise deform in shape; generate an electrical shock; generate a capacitive coupling; or generate another sensation or combination of sensations that are perceived as a haptic effect by the user. Some types of haptic effects, such as vibrations and kinesthetic haptic effects, may be particularly apparent when the carrying device 218 is rigid. And some types of haptic effects may be indirectly perceivable through contact with the peripheral 102. For example, the carrying device 218 may output a haptic effect by deforming in shape or vibrating. This may propagate through a rigid member of the carrying device 218 to the peripheral 102, thereby causing the peripheral 102 to move. The user may be contacting the peripheral and perceive the peripheral's movement as the haptic effect.

In some examples, the system 200 can implement one or more processes discussed below.

### Illustrative Methods for a Haptically-Enabled Peripheral

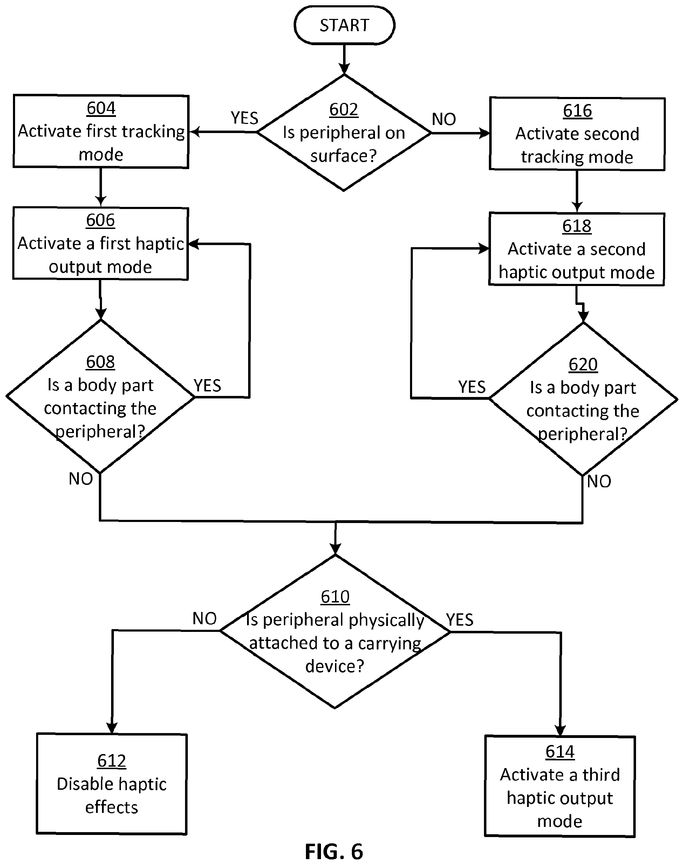

FIG. 6 is a flow chart of an example of a process for implementing some aspects of the present disclosure. In other examples, more steps, fewer steps, different steps, or a different combination of the steps shown in FIG. 6 can be implemented. The steps below are discussed with reference to the system 200 shown in FIG. 2.

In step 602, a processor 202 determines if a peripheral 102 is positioned on a surface. The processor 202 can implement any number and combination of techniques to determine whether the peripheral 102 is positioned on or off the surface.

In some examples, the processor 202 can determine a round-trip time of a transmission that is reflected off the surface, and then use the round-trip time to determine whether the peripheral 102 is positioned on or off the surface. For example, the sensor 106 can be an optical sensor that includes a light source and a sensor. An example of the light source can be a light-emitting diode (LED) and an example of the sensor can be a complimentary metal-oxide semiconductor (CMOS). The light source can transmit light to the surface, which can be reflected and detected by the sensor. The processor 202 can determine an amount of time between when the light was emitted by the light source and detected by the sensor. This amount of time can be referred to as the round-trip time. As the peripheral 102 moves off the surface, the round-trip time may increase. The processor 202 can compare the round-trip time to a predefined threshold. If the round-trip time exceeds the predefined threshold, the processor 202 can determine that the peripheral 102 is positioned off the surface. If the round-trip time is below the predefined threshold, the processor 202 can determine that the peripheral 102 is positioned on the surface.

As another example, the sensor 106 can be include pressure source and a sensor. Examples of the pressure source can be an ultrasonic transducer or a speaker. Examples of the sensor can be an ultrasonic transducer or a microphone. The sound source can emit a pressure wave (e.g., a sound or ultrasonic pressure wave) to the surface, which can be reflected and detected by the sensor. The processor 202 can determine the round-trip time between when the pressure wave was emitted by the pressure source and detected by the sensor. The processor 202 can compare the round-trip time to a predefined threshold. If the round-trip time exceeds the predefined threshold, the processor 202 can determine that the peripheral 102 is positioned off the surface. If the round-trip time is below the predefined threshold, the processor 202 can determine that the peripheral 102 is positioned on the surface. In some examples, the pressure source and the sensor can be the same. For example, a single ultrasonic transducer can both transmit the pressure wave and detect the pressure wave's reflection.

In some examples, the processor 202 can determine whether the peripheral 102 is positioned on or off the surface based on one or more characteristics of images captured by a camera. For example, the sensor 106 can be a camera facing the surface. If the peripheral 102 is removed from the surface, images captured by the camera may have an increased brightness, field of view, color distribution, or any combination of these, in comparison to images taken when the peripheral 102 was positioned on the surface. The processor 202 can detect the changes in some or all of these characteristics and responsively determine that the peripheral 102 is positioned off the surface. Conversely, if the peripheral 102 is positioned on the surface, images captured by the camera may have a decreased brightness, field of view, color distribution, or any combination of these, in comparison to images taken when the peripheral 102 was positioned off the surface. The processor 202 can detect some the changes in some or all of these characteristics and responsively determine that the peripheral 102 is positioned on the surface.

In some examples, the processor 202 can determine whether the peripheral 102 is positioned on or off the surface based on a magnetic field of a magnetic material. For example, the sensor 106 can be a magnetometer and the surface can include a magnetic material. As the peripheral 102 moves off the surface, the strength of the magnetic field detected by the magnetometer can decrease. The processor 202 can compare the strength of the magnetic field detected by the magnetometer to a predefined threshold. If the strength of the magnetic field is below the predefined threshold, the processor 202 can determine that the peripheral 102 is positioned off the surface. If the strength of the magnetic field is above the predefined threshold, the processor 202 can determine that peripheral 102 is positioned on the surface.

In an example in which the peripheral 102 includes an accessory 222, the processor 202 can determine that the peripheral 102 is positioned off the surface when the accessory 222 is disconnected from the base of the peripheral 102. And the processor 202 can determine that the peripheral 102 is positioned on the surface when the accessory 222 is attached to the base of the peripheral 102. The processor 202 can determine whether the accessory 222 is attached to, or detached from, the base using an attachment sensor (e.g., the attachment sensor 304 of FIG. 3).

In some example, the processor 202 can determine whether the peripheral 102 is positioned on or off the surface based on an orientation or tilt of the peripheral 102. For example, the sensor 106 can be a gyroscope or inertial measurement unit (IMU). When the peripheral 102 is positioned on the surface, the peripheral 102 may be level. The processor 202 can detect that the peripheral 102 is level and responsively determine that the peripheral 102 is positioned on the surface. If the peripheral 102 moves off the surface, the peripheral 102 may tilt. The processor 202 can detect the tilt and responsively determine that the peripheral 102 is positioned off the surface.

In some examples, the processor 202 can determine whether the peripheral 102 is positioned on or off the surface using inside-out tracking or outside-in tracking techniques. For example, the processor 202 can use a SLAM algorithm to determine the 3D position of the peripheral 102 in real space (e.g., relative to the surface). The processor 202 can then determine whether the peripheral 102 is positioned on or off the surface based on the 3D position of the peripheral 102 in real space.

In some examples, the processor 202 can determine whether the peripheral 102 is positioned on or off the surface based on an amount of force exerted from one portion of the peripheral 102 onto another portion of the peripheral 102. For example, the processor 202 can determine that the peripheral 102 is positioned on the surface if the force exerted by an upper shell of the peripheral 102 onto a lower shell of the peripheral 102 exceeds a predefined threshold.

If the processor 202 determines that the peripheral 102 is positioned on the surface, the process can proceed to step 604. Otherwise, the process can proceed to step 616.

In step 604, the processor 202 activates a first tracking mode. In some examples, the processor 202 activates the first tracking mode by setting a flag in memory (e.g., memory device 204). Additionally or alternatively, the processor 202 can activate the first tracking mode by transmitting a communication to the computing device 214 indicating that the peripheral 102 is in the first tracking mode.

In some examples, the processor 202 can prioritize 2D tracking over 3D tracking when the first tracking mode is activated. For example, the processor 202 may weight sensor values from a 2D sensor higher than sensor values from a 3D sensor (e.g., by multiplying sensor values from the 2D sensor by a certain coefficient). As another example, the processor 202 may disregard sensor values from the 3D sensor entirely when the first tracking mode is activated. Prioritizing the 2D tracking over 3D tracking may enable the more-precise 2D sensor to have a larger effect in controlling the computing device 214, which may result in more refined control of the computing device 214.

In step 606, the processor 202 activates a first haptic output mode. In some examples, the processor 202 activates the first haptic output mode by setting a flag in memory. Additionally or alternatively, the processor 202 can activate the first haptic output mode by transmitting a communication to the computing device 214 indicating that the peripheral 102 is in the first haptic output mode.

The peripheral 102 may only output certain haptic effects, only output haptic effects in response to certain events, or both when the peripheral 102 is in the first haptic output mode. In some examples, the peripheral 102 may use a first haptic-effect library or a first haptic-effect algorithm to generate haptic effects when in the first haptic output mode.

In step 608, the processor 202 determines if a body part is contacting the peripheral 102. It may be desirable to implement this step to reduce the battery power wasted by outputting haptic effects when the user is not contacting the peripheral 102, since the user may not be able to feel such haptic effects. The processor 202 can determine if a body part is contacting the peripheral 102 by analyzing sensor signals from a contact sensor (e.g., sensor 106, a pressure sensor, a capacitive sensor, strain gauge, or any combination of these).

As a particular example, a user may be resting a palm or fingers on the peripheral 102 to manipulate the peripheral 102. While the user is contacting the peripheral 102, the processor 202 can receive sensor signals from the contact sensor indicating that the user is contacting the peripheral 102. Based on the sensor signals, the processor 202 can determine that the user is contacting the peripheral 102. In one particular example, the contact sensor can be a force sensor. The force sensor can detect the amount of force applied to a portion (e.g., an upper surface) of the peripheral 102 and transmit corresponding sensor signals to the processor 202. The processor 202 can receive the sensor signals and determine that the user is contacting the peripheral 102 if, for example, the amount of force applied to the portion of the peripheral 102 exceeds a predefined threshold. The processor 202 may allow haptic effects to be output in response to determining that the user is contacting the peripheral 102. As another example, the user may remove his hand from the peripheral, for example to go to another room or type on a keyboard. The processor 202 can receive sensor signals from the contact sensor indicating that the user is not contacting the peripheral 102. For example, the processor 202 can receive sensor signals indicating that the force applied to the portion of the peripheral 102 is below the predefined threshold. Based on the sensor signals, the processor 202 can determine that the user is not contacting the peripheral 102 and, for example, disable haptic effects (e.g., in step 612).

If the processor 202 determines that the body part is contacting the peripheral 102, the process can return to step 606 and provide haptic effects via the first haptic output mode. Otherwise, the process can proceed to step 610.

In step 610, the processor 202 determines if the peripheral 102 is physically attached to a carrying device 218. It may be desirable to implement this step because, although a user may not be directly contacting the peripheral 102, the user may be coupled to the peripheral 102 via the carrying device 218 and capable of receiving haptic effects via the carrying device 218.

In some examples, the peripheral 102 can include an attachment sensor to detect whether the carrying device 218 is attached to, or detached from, the peripheral 102. The processor 202 can receive sensor signals from the attachment sensor and determine whether the carrying device 218 is attached to the peripheral 102 based on the sensor signals. As one example, the peripheral 102 can include a normally open conductive path that becomes closed when the carrying device 218 is attached. The processor 202 can detect whether the conductive path is open or closed and use this information to determine whether the carrying device 218 is attached. As another example, the peripheral 102 can include a button that is in a first configuration (e.g., raised) when the carrying device 218 is not attached. When the carrying device 218 is attached, the button can switch to another configuration (e.g., depressed). The processor 202 can detect the button's configuration and use this information to determine whether the carrying device 218 is attached.

If the processor 202 determines that the peripheral 102 is not physically attached to the carrying device 218, the process can proceed to step 612, in which the processor 202 disables haptic effects. The processor 202 can disable haptic effects by setting a flag in memory, transmitting a communication to the computing device 214 indicating that haptic effects are to be disabled, or both. When haptic effects are disabled, the peripheral 102 may not output any haptic effects.

If the processor 202 determines that the peripheral 102 is physically attached to the carrying device 218, the process can proceed to step 614, where the processor 202 can activate a third haptic output mode. In some examples, the third haptic output mode is for rendering haptic effects during hands-free use. For example, the peripheral 102 may output haptic effects via the carrying device 218 when in the third haptic output mode. And the peripheral 102 may also disable haptic output devices, such as haptic output devices 108 and 224, positioned in the peripheral 102. This can enable the user to still perceive haptic effects via the carrying device 218, even if the user is not directly contacting the body of the peripheral 102. This may also reduce wasted power consumed by haptic output devices 108 and 224 if the user is not contacting the peripheral 102.

As a particular example, a user may use the peripheral 102 shown in FIG. 5 to provide 2D input while playing a video game. The user may then wish to provide 3D input, and pick the peripheral 102 up off the surface 104. The peripheral 102 may hang from the user's wrist via the carrying device 218. As the user moves his arm around, the peripheral 102 may also move due to the rigidity of the carrying device 218, providing 3D input. But the user may not actually be in direct contact with the body of the peripheral 102. In some examples, the peripheral 102 can detect that the user is not contacting the body of the peripheral 102, detect that the carrying device 218 is connected to the peripheral 102, and responsively activate the third haptic output mode. Once in the third haptic output mode, the peripheral 102 may provide haptic effects via the carrying device 218, which the user can perceive.

In other examples, the peripheral 102 may cause a wearable device to output haptic effects when in the third haptic output mode. Examples of the wearable device can include a watch, tie, glasses, glove, shoe, shirt, strap, hat, patch, or any combination of these. For instance, in the above example in which the peripheral 102 is hanging from the user's wrist via the carrying device 218, and the user is providing 3D input, the user may also be wearing a smart watch. The peripheral 102 can detect that the user is not contacting the body of the peripheral 102, detect that the carrying device 218 is connected to the peripheral 102, and responsively activate the third haptic output mode. When in the third haptic output mode, the peripheral 102 can transmit haptic signals to the smart watch, which can receive the haptic signals and responsively generate haptic effects. This may enable the user to receive haptic effects via other haptic output devices coupled to the user's body.

As mentioned above with respect to step 602, the processor 202 can determine if the peripheral 102 is positioned on the surface. If not, the process can proceed to step 616, in which the processor 202 activates a second tracking mode. In some examples, the processor 202 activates the second tracking mode by setting a flag in memory. Additionally or alternatively, the processor 202 can activate the second tracking mode by transmitting a communication to the computing device 214 indicating that the peripheral 102 is in the second tracking mode.

In some examples, the processor 202 can prioritize 3D tracking over 2D tracking when the second tracking mode is activated. For example, the processor 202 may weight sensor values from a 3D sensor higher than sensor values from a 2D sensor (e.g., by multiplying sensor values from the 3D sensor by a certain coefficient). As another example, the processor 202 may disregard sensor values from the 2D sensor entirely when the second tracking mode is activated. Prioritizing the 3D tracking over 2D tracking may enable 3D input to be used to control the computing device 214, which may provide a greater range of functionality to the computing device 214.

In step 618, the processor 202 activates a second haptic output mode. In some examples, the processor 202 activates the second haptic output mode by setting a flag in memory. Additionally or alternatively, the processor 202 can activate the second haptic output mode by transmitting a communication to the computing device 214 indicating that the peripheral 102 is in the second haptic output mode.

The peripheral 102 may only output certain haptic effects, only output haptic effects in response to certain events, or both when the peripheral 102 is in the second haptic output mode. For example, the peripheral 102 may output at least one haptic effect in the second haptic output mode that is different from the haptic effects output in the first haptic output mode. Additionally or alternatively, the peripheral 102 may output a haptic effect in response to at least one event in the second haptic output mode that is different from the events that trigger haptic effects in the first haptic output mode. As a particular example, the peripheral 102 may output a haptic effect in response to the user making a 3D gesture through real space using the peripheral 102 when the peripheral 102 is in the second haptic output mode. In contrast, since a user may be unable to make a 3D gesture using the peripheral 102 when it is positioned on a surface (and in the first tracking mode), the peripheral 102 may output haptic effects in response to other types of events, such as 2D movements along the surface, when the peripheral 102 is in the first haptic output mode.

In some examples, the peripheral 102 may use a second haptic-effect library or a second haptic-effect algorithm to generate haptic effects when in the second haptic output mode. The second haptic-effect library can be different from the first haptic-effect library, and/or the second haptic-effect algorithm can be different from the first haptic-effect algorithm.

In step 620, the processor 202 determines if a body part is contacting the peripheral 102. In some examples, this step can be implemented using any of the methods discussed above with respect to step 608. The rest of the process can then flow as discussed above.

The processor 202 may perform various other operations in response to detecting that the peripheral 102 is positioned on the surface or off the surface in step 602. For example, if the processor 202 detects that the peripheral 102 is positioned on the surface, the processor 202 can transmit a communication configured to cause a 2D version of a virtual object to be displayed. In one such example, the processor 202 can transmit a communication to the computing device 214 that causes the computing device 214 to display the 2D version of a virtual avatar on a computer monitor. Additionally or alternatively, if the processor 202 detects that the peripheral 102 is positioned off the surface, the processor 202 can transmit a communication configured to cause a 3D version of a virtual object to be displayed. For example, the processor 202 can transmit a communication to the headset 228 that causes the headset 228 to display a 3D version of the virtual avatar. In some examples, the above-described transition from the 2D version of the virtual object to the 3D version of the virtual object may be at least partially effectuated by a user interaction with the 2D virtual object. For example, the user may use the peripheral 102 to select the 2D object (e.g., by holding down a button) and then raise the peripheral 102 off the surface. The processor 202 and/or the computing device 214 can detect the selection of the 2D virtual object and that the peripheral 102 is off the surface and responsively cause the 3D version of a virtual object to be displayed.

In some examples, the processor 202 can determine that the peripheral 102 is positioned on a surface that is level or tilted (e.g., curved, slanted, sloped, or otherwise not level). For example, the processor 202 can use any of the methods discussed in step 602 to determine that the peripheral 102 is positioned on a surface. The processor 202 can also use the sensor 106 to detect an orientation of the peripheral 102. If the processor 202 determines that the peripheral 102 is both positioned on a surface and tilted, the processor 202 can determine that the peripheral 102 is positioned on a tilted surface. In some examples, the processor 202 activates a third tracking mode in response to determining that the peripheral 102 is positioned on a tilted surface. The third tracking mode may combine features of the first tracking mode and the second tracking mode. For example, the peripheral 102 may use both the 2D sensor and the 3D sensor to provide input to the computing device 214 when in the third tracking mode. In one such example, the peripheral 102 uses the 2D sensor to determine one or more coordinates (e.g., X and Y coordinates) in a first coordinate plane. And the peripheral 102 uses the 3D sensor to determine one or more coordinates (e.g., a Z coordinate) in a second coordinate plane that is perpendicular to the first coordinate plane. The peripheral 102 can then transmit some or all of the coordinates to the computing device 214, which can use the coordinates to determine the physical position of the peripheral 102 in real space.

The processor 202 may additionally or alternatively activate a fourth haptic output mode in response to determining that the peripheral 102 is positioned on a tilted surface. The processor 202 can activate the fourth haptic output mode, for example, using any of the methods discussed above. The peripheral 102 may only output certain haptic effects, only output haptic effects in response to certain events, or both when the peripheral 102 is in the fourth haptic output mode. In some examples, the peripheral 102 may use a fourth haptic-effect library or a fourth haptic-effect algorithm to generate haptic effects when in the fourth haptic output mode.

As a particular example, a user may position the peripheral 102 on a body part (e.g., his leg) and move the peripheral 102 around. As the user moves the peripheral 102 over a level portion of the body part, the peripheral 102 can detect that it is positioned on a level surface and responsively activate the first tracking mode and/or the first haptic output mode. If the user moves the peripheral 102 toward an inclined or curved portion of the body part, the peripheral 102 can detect that it is positioned on a tilted surface and responsively activate the third tracking mode and/or the third haptic output mode. In the third tracking mode, the peripheral 102 may provide 3D input to the computing device 214 using a combination of sensors. This may enable the computing device 214 to accurately track the physical position of the peripheral 102 as it moves along uneven, deformed, or tilted surfaces, for example, to update the position of a cursor on the computing device 214.

In some examples, the third tracking mode may enable the movement of a cursor on the computing device 214 to conform (e.g., one to one) to the movement of the peripheral 102 along tilted surfaces, which may enable new types of user interfaces. For example, physical surfaces can be shaped or otherwise configured similarly to virtual objects in a virtual environment, and movement of the peripheral 102 along such surfaces can be tracked and translated into cursor movement or other interactions in the virtual environment. As a particular example, a virtual environment can include a virtual ball having a rounded surface. A user can move the peripheral 102 along the rounded surface of a physical ball in real space, which can be tracked and translated into cursor movement along the rounded surface of the virtual ball in the virtual environment. As another example, a virtual environment can include an icon floating in virtual space at a virtual height. To access the icon, the user may slide the peripheral 102 up an inclined plane (e.g., on the user's desk) until the physical height of the peripheral 102 in real space corresponds to the virtual height of the icon in the virtual environment. The user may then be able to use the peripheral 102 to select or otherwise interact with the icon.

Although the tracking modes are described above as "first," "second," and "third" for ease of explanation, these labels are not intended to prescribe a particular order to the tracking modes or otherwise limit the order, number, or combination of tracking modes implemented by the peripheral 102. Likewise, although the haptic output modes are described above as "first," "second," "third," and "fourth" for ease of explanation, these labels are not intended to prescribe a particular order to the haptic output modes or otherwise limit the order, number, or combination of haptic output modes implemented by the peripheral 102.

### Additional Systems and Methods for a Haptically-Enabled Peripheral

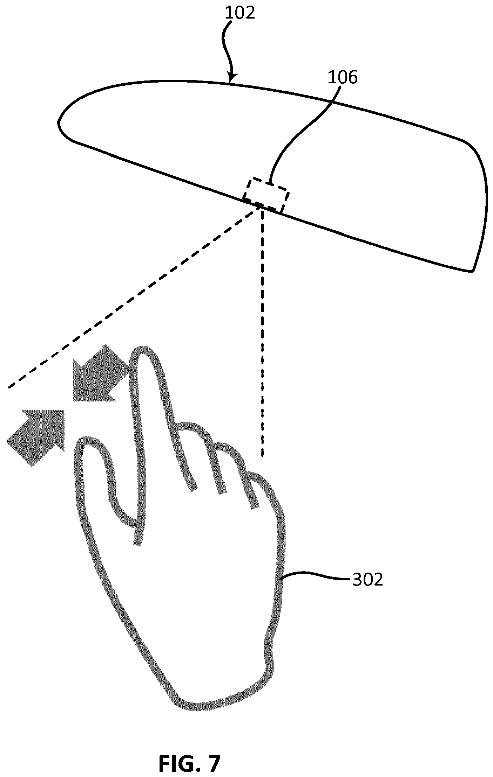

FIG. 7 is an example of a peripheral 102 detecting a gesture according to some aspects of the present disclosure. In this example, the sensor 106 can be a camera or another sensor suitable to detect a gesture. The user may pick the peripheral 102 up off the surface with one hand, orient a sensor 106 of the peripheral 102 towards another hand, and perform the pinch gesture using the other hand, as shown. The peripheral 102 can detect the gesture and responsively perform one or more operations. Examples of the operations can include activating a certain tracking mode, activating a certain haptic output mode, outputting a haptic effect, transmitting a command to a computing device based on the gesture, transmitting a signal indicating the gesture to the computing device, or any combination of these. Enabling the peripheral 102 to perform gesture recognition may enable both hands to be used to provide input to the computing device, and/or additional kinds of input (e.g., gestures, 2D movements, 3D movements, etc.) to be provided to the computing device. Although this example is discussed with reference to detecting a gesture performed by the user's hand, the user may alternatively use another object (e.g., a leg, wand, phone, or stylus) to perform the gesture. The peripheral 102 can detect any number and combination of gestures performed by any number and combination of objects.

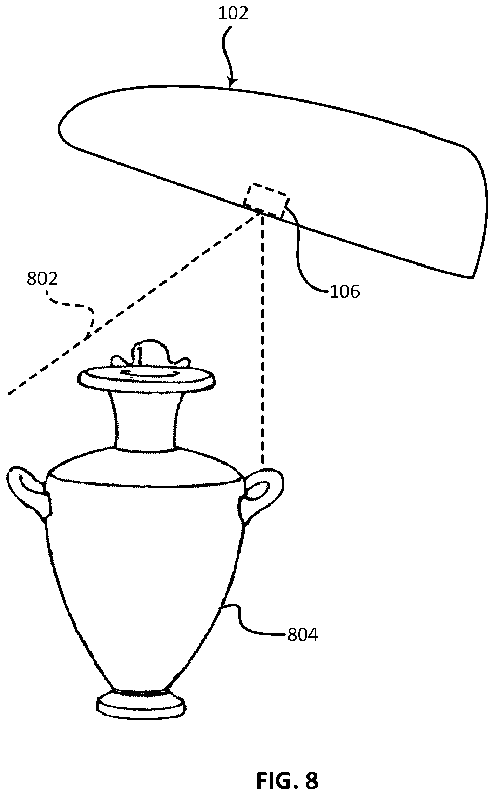

FIG. 8 is an example of a peripheral 102 detecting an object 804 (e.g., a physical object) according to some aspects of the present disclosure. In this example, the sensor 106 in the peripheral 102 can be a camera, laser scanner, or another sensor suitable for detecting an object. The user may pick the peripheral 102 up off the surface and orient a field of view 802 of the sensor 106 of the peripheral 102 towards the object 804. The peripheral 102 can then "scan" or otherwise detect the object and responsively perform one or more operations, such as the operations discussed above.

In one particular example, the user can orient the sensor 106 of the peripheral 102 facing the object 804, which in the example of FIG. 8 is an urn. The peripheral 102 can use the sensor 106 to determine various physical properties of the object 804. Examples of the physical properties can include the height, width, shape, size, color, texture, type, and/or positioning (in real space) of the object 804. In some examples, the peripheral 102 may then transmit the physical properties of the object 804 to a computing device to cause the computing device to render a 3D virtual representation (e.g., a 3D model) of the object 804. The computing device may render the 3D model of the object 804 within a virtual reality environment or an augmented reality environment.

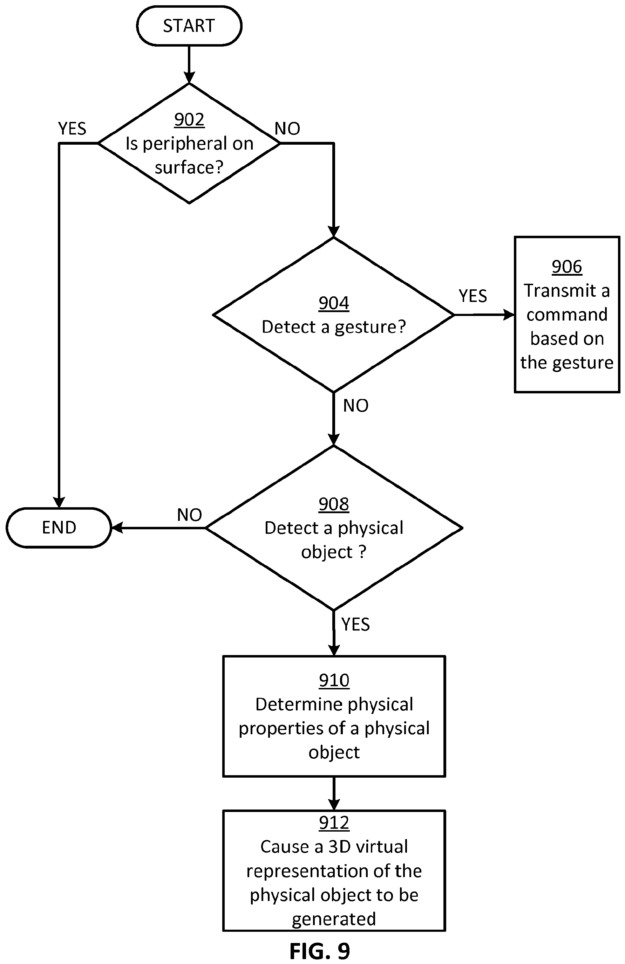

Some of the above examples can be implemented according to the process shown in FIG. 9. In other examples, more steps, fewer steps, different steps, or a different combination of the steps shown in FIG. 9 can be implemented. The steps below are discussed with reference to the system 200 shown in FIG. 2.

In step 902, the processor 202 determines if the peripheral 102 is positioned on the surface. In some examples, this step can be implemented using any number and combination of the methods discussed with respect to step 602 of FIG. 6. If the processor 202 determines that the peripheral 102 is positioned on the surface, the process can end. Otherwise, the process can continue to step 704.

In step 904, the processor 202 determines whether a gesture is detected. For example, the processor 202 can analyze images or other sensor data from sensor 106 to determine if a gesture was performed. If so, the process can continue to step 906. Otherwise, the process can continue to step 908.

In step 906, the processor 202 transmits a command based on the gesture. For example, the processor 202 can transmit a command that indicates the gesture, that was determined based on the gesture, or that is otherwise associated with the gesture. The processor 202 can transmit the command via a wired or wireless interface to computing device 214. The command may cause the computing device 214 to perform one or more operations.

In step 908, the processor 202 determines whether a physical object is detected. For example, the processor 202 can analyze images or other sensor data from sensor 106 to determine if a physical object is detected. If so, the process can continue to step 910. Otherwise, the process can end.

In step 910, the processor 202 determines physical properties of a physical object. The processor 202 can determine the physical properties of the physical object based on sensor signals from sensor 106. For example, the processor 202 can analyze images from sensor 106 to determine a size, shape, color, and texture of the physical object. The processor 202 can implement one or more image processing algorithms to identify the physical properties of the physical object via the images.

In step 912, the processor 202 causes a 3D representation of the physical object to be generated. For example, the processor 202 can transmit the physical properties of the physical object to the computing device 214, which in turn can render a 3D model of the physical object. Alternatively, the processor 202 can use physical properties of the physical object to itself render the 3D representation of the physical object. The processor 202 and/or the computing device 214 can include graphics rendering software for generating the 3D representation of the physical object.

### Illustrative Combination of Examples

Other examples of the present disclosure can combine some or all of the examples discussed above. One illustrative example can involve a user sitting at a desk and interacting with a peripheral by sliding the peripheral on a surface. The user can move around the mouse to interact with various graphical objects displayed on a computer monitor and to perform various operations (e.g., drag-and-drop operations). If the user opens an application that supports 3D interaction, the computing device may transmit a haptic signal to the peripheral that causes the peripheral to vibrate or otherwise indicate that 3D interaction is available. One example of the application can be a 3D modeling application. Upon feeling the vibration, the user may put on an augmented reality headset and lift his hand upwards to provide 3D input.

As the user lifts up his hand, a carrying device (coupling the peripheral to his wrist) will also lift the peripheral from the surface, enabling the user to release his grip from the peripheral without the peripheral falling. Based on the peripheral being lifted off the surface, the peripheral may activate a second haptic output mode in which the peripheral changes shape from one form factor to another form factor. For example, the peripheral may detect that it has been lifted from the surface and responsively change from a first form factor shaped for the user's palm to rest on the top surface of the peripheral to a second form factor shaped for the user's palm to rest at a 60-degree slope. The user can then use the peripheral to interact with various holograms and virtual objects output by the augmented reality headset.

To provide additional types of input, the user may remove an accessory (e.g., a module or stylus) from the peripheral. With the accessory in one hand and a remainder of the peripheral in the other hand, the user can then provide input using both devices at the same time (or sequentially). For example, the user can perform multi-object interactions, scaling gestures, pinching gestures, or any combination of these, using both devices. In such an example, both the base of the peripheral and the accessory can include 3D sensors. When finished with the accessory, the user can re-attach the accessory to the peripheral.

After re-attaching the accessory to the peripheral, the user may orient a sensor of the peripheral toward a free hand and perform a gesture with the free hand. The peripheral can detect the gesture and perform associated operations. For example, the peripheral can detect the gesture and responsively cause a certain command to be performed in the application. Examples the commands can include opening a menu, opening a file, saving a file, creating a new file, or any combination of these.

The user may additionally or alternatively use the peripheral to scan a physical object in the room, like a sculpture, by orienting a sensor in the peripheral toward the physical object. This may cause a 3D representation of the object to be rendered or displayed (e.g., as a hologram or virtual object). For example, this may cause the 3D representation of the object to be displayed in the application. The user may then manipulate the 3D representation of the object by performing various 3D movements using the peripheral. The user can additionally or alternatively interact with various other virtual objects using the peripheral. For example, the application can include various virtual buttons. The user can reach out with the peripheral toward a virtual button, such as a virtual exit button for exiting the application. When the peripheral contacts the virtual button, the peripheral can vibrate (and the virtual button may increase in size) to notify the user that the virtual button was contacted. The user can then manipulate an input device on the peripheral to virtually "press" the virtual button, which in one example causes the application to close.

Once the user is done using the application and/or providing 3D input, the user can sit back down and rest the peripheral back on the surface. Based on the peripheral being placed back on the surface, the peripheral may activate a first haptic output mode in which the peripheral changes shape back to the first form factor. The user may then continue to use the peripheral to provide 2D input to the computing device.

### General Considerations

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Also, configurations may be described as a process that is depicted as a flow diagram or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, and equivalents may be used without departing from the spirit of the disclosure. For example, the above elements may be components of a larger system, wherein other rules may take precedence over or otherwise modify the application of the invention. Also, a number of steps may be undertaken before, during, or after the above elements are considered. Accordingly, the above description does not bound the scope of the claims.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or values beyond those recited. Headings, lists, and numbering included herein are for ease of explanation only and are not meant to be limiting.

Examples in accordance with aspects of the present subject matter can be implemented in digital electronic circuitry, in computer hardware, firmware, software, or in combinations of the preceding. In one example, a computer may comprise a processor or processors. The processor comprises or has access to a computer-readable medium, such as a random access memory (RAM) coupled to the processor. The processor executes computer-executable program instructions stored in memory, such as executing one or more computer programs including a sensor sampling routine, selection routines, and other routines to perform the methods described above.

Such processors may comprise a microprocessor, a digital signal processor (DSP), an application-specific integrated circuit (ASIC), field programmable gate arrays (FPGAs), and state machines. Such processors may further comprise programmable electronic devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example tangible computer-readable media, that may store instructions that, when executed by the processor, can cause the processor to perform the steps described herein as carried out, or assisted, by a processor. Examples of computer-readable media may comprise, but are not limited to, all electronic, optical, magnetic, or other storage devices capable of providing a processor, such as the processor in a web server, with computer-readable instructions. Other examples of media comprise, but are not limited to, a floppy disk, CD-ROM, magnetic disk, memory chip, ROM, RAM, ASIC, configured processor, all optical media, all magnetic tape or other magnetic media, or any other medium from which a computer processor can read. Also, various other devices may comprise computer-readable media, such as a router, private or public network, or other transmission device. The processor, and the processing, described may be in one or more structures, and may be dispersed through one or more structures. The processor may comprise code for carrying out one or more of the methods (or parts of methods) described herein.

While the present subject matter has been described in detail with respect to specific examples thereof, it will be appreciated that those skilled in the art, upon attaining an understanding of the foregoing may readily produce alterations to, variations of, and equivalents to such examples. Accordingly, it should be understood that the present disclosure has been presented for purposes of example rather than limitation, and does not preclude inclusion of such modifications, variations and/or additions to the present subject matter as would be readily apparent to one of ordinary skill in the art.

## Claims

1. A peripheral (102) comprising:
a processor (202); and
a memory device (204) comprising program code that is executable by the processor to cause the processor to:
receive one or more sensor signals from one or more sensors (106) usable to detect a physical position of the peripheral in real space;
determine whether the peripheral is positioned on a surface (104) or off the surface in real space based on the one or more sensor signals;
responsive to determining that the peripheral is positioned on the surface, activate a first haptic output mode configured to provide a first set of haptic effects based on two-dimensional movement of the peripheral along the surface; and
responsive to determining that the peripheral is positioned off the surface, activate a second haptic output mode configured to provide a second set of haptic effects based on three-dimensional movement of the peripheral in real space.

2. The peripheral (102) of claim 1, wherein the memory device (204) further comprises program code that is executable by the processor (202) to cause the processor to:
responsive to determining that the peripheral is physically positioned off the surface (104), determine a three-dimensional position of the peripheral in real space by applying an inside-out tracking technique based on the one or more sensor signals;
determine a haptic effect based on (i) the second haptic output mode being activated and (ii) the three-dimensional position of the peripheral in real space; and
cause a haptic output device (108) to output the haptic effect.

3. The peripheral (102) of claim 2, wherein the memory device (204) further comprises program code that is executable by the processor (202) to cause the processor to:
receive a sensor signal from an optical sensor (216) that is external to the peripheral; and
determine the three-dimensional position of the peripheral in real space by (i) applying the inside-out tracking technique using the one or more sensor signals from the one or more sensors (106) and (ii) using the sensor signal from the optical sensor that is external to the peripheral.

4. The peripheral (102) of any preceding claim, wherein the memory device (204) further comprises program code that is executable by the processor (202) to cause the processor to:
responsive to determining that the peripheral is physically positioned on the surface (104), determine a two-dimensional position of the peripheral on the surface based on the one or more sensor signals;
determine a haptic effect based on (i) the first haptic output mode being activated and (ii) the two-dimensional position of the peripheral on the surface; and
cause a haptic output device (108) to output the haptic effect.

5. The peripheral (102) of any preceding claim, wherein the one or more sensors (106) comprises a first optical sensor and a second optical sensor that is separate from the first optical sensor, and wherein the memory device (204) further comprises program code that is executable by the processor (202) to cause the processor to:
responsive to determining that the peripheral is positioned on the surface (104), activate a first tracking mode in which two-dimensional input generated using the first optical sensor is provided to a remote computing device (214) rather than three-dimensional input generated using the second optical sensor; and
responsive to determining that the peripheral is positioned off the surface, activate a second tracking mode in which the three-dimensional input generated using the second optical sensor is provided to the remote computing device rather than two-dimensional input generated using the first optical sensor.

6. The peripheral (102) of any preceding claim, wherein the memory device (204) further comprises program code that is executable by the processor (202) to cause the processor to:
determine whether the peripheral is physically attached to a carrying device (218) configured to physically couple the peripheral to a body part other than a hand; and
responsive to determining that the peripheral is physically coupled to the carrying device, activate a third haptic output mode configured for rendering haptic effects during hands-free use.

7. The peripheral (102) of any preceding claim, wherein the memory device (204) further comprises program code that is executable by the processor (202) to cause the processor to:
determine whether a body part is contacting the peripheral based on a sensor signal from a contact sensor; and
responsive to determining that the body part is not contacting the peripheral, disable haptic effects.

8. The peripheral (102) of any preceding claim, further comprising a sensor usable to detect a gesture through real space performed by an object that is remote from the peripheral, wherein the memory device (204) further comprises program code that is executable by the processor (202) to cause the processor to:
determine the gesture through real space using the sensor; and
based on the gesture, transmit a command associated with the gesture to a remote computing device (214).

9. The peripheral (102) of any preceding claim, further comprising a sensor usable to determine physical properties of a physical object in real space, wherein the memory device (204) further comprises program code that is executable by the processor (202) to cause the processor to:
determine the physical properties of the physical object using the sensor; and
cause a three-dimensional virtual representation of the physical object to be generated in a virtual environment using the physical properties of the physical object.

10. The peripheral (102) of any preceding claim, wherein the memory device (204) further comprises program code that is executable by the processor (202) to cause the processor to:
cause a two-dimensional version of a virtual object to be displayed when the peripheral is positioned on the surface (104); and
cause a three-dimensional version of the virtual object to be displayed when the peripheral is positioned off the surface.

11. A non-transitory computer-readable medium comprising program code that is executable by a processor (202) to cause the processor to:
receive one or more sensor signals from one or more sensors usable to detect a physical position of a peripheral (102) in real space;
determine whether the peripheral is physically positioned on a surface or off the surface (104) in real space based on the one or more sensor signals;
responsive to determining that the peripheral is physically positioned on the surface, activate a first haptic output mode configured to provide a first set of haptic effects based on two-dimensional movement of the peripheral along the surface; and
responsive to determining that the peripheral is positioned off the surface, activate a second haptic output mode configured to provide a second set of haptic effects based on three-dimensional movement of the peripheral in real space.

12. A method comprising:
receiving, by a processor (202) of a peripheral (102), a first set of sensor signals from one or more sensors usable to detect a physical position of the peripheral in real space;
determining, by the processor, that the peripheral is physically positioned on a surface (104) based on the first set of sensor signals;
responsive to determining that the peripheral is physically positioned on the surface, activating, by the processor, a first haptic output mode configured to provide a first set of haptic effects based on two-dimensional movement of the peripheral along the surface;
receiving, by the processor, a second set of sensor signals from the one or more sensors;
determining, by the processor, that the peripheral is physically positioned off the surface in real space based on the second set of sensor signals; and
responsive to determining that the peripheral is positioned off the surface, activating, by the processor, a second haptic output mode configured to provide a second set of haptic effects based on three-dimensional movement of the peripheral in real space.

13. The method of claim 12, further comprising:
determining a three-dimensional position of the peripheral (102) in real space by applying an inside-out tracking technique based on the second set of sensor signals;
determining a haptic effect based on (i) the second haptic output mode being activated and (ii) the three-dimensional position of the peripheral in real space; and
causing a haptic output device (108) to output the haptic effect.

14. The method of claims 12 or 13, wherein the one or more sensors (106) comprises a first optical sensor and a second optical sensor that is separate from the first optical sensor, and further comprising:
responsive to determining that the peripheral (102) is physically positioned on the surface, activating a first tracking mode in which a two-dimensional input generated using the first optical sensor is provided to a computing device rather than a three-dimensional input generated using the second optical sensor; and
responsive to determining that the peripheral is physically positioned off the surface in real space, activating a second tracking mode in which the three-dimensional input generated using the second optical sensor is provided to the computing device (214) rather than two-dimensional input determined using the first optical sensor.

15. The method of any one of claims 12-14, further comprising:
determining whether the peripheral (102) is physically attached to a carrying device (218) configured to physically couple the peripheral to a body part other than a hand; and
responsive to determining that the peripheral is physically coupled to the carrying device, activating a third haptic output mode configured for rendering haptic effects during hands-free use.

16. The method of any one of claims 12-15, further comprising:
determining whether a body part is contacting the peripheral (102) based on a sensor signal from a contact sensor; and
responsive to determining that the body part is not contacting the peripheral, activating a third haptic output mode in which haptic effects are disabled.

17. The method of any one of claims 12-16, further comprising:
displaying a two-dimensional version of a virtual object responsive to determining that the peripheral (102) is physically positioned on the surface (104); and
displaying a three-dimensional version of the virtual object responsive to determining that the peripheral is physically positioned off the surface.
